(19) Europäisches Patentamt
European Patent Office
Office européen des brevets

(11) Veröffentlichungsnummer: **0 155 580**
**B1**

(12) # EUROPÄISCHE PATENTSCHRIFT

(45) Veröffentlichungstag der Patentschrift: **28.01.87**

(51) Int. Cl.[4]: **C 09 B 29/01,** C 09 B 29/08, D 06 P 1/18

(21) Anmeldenummer: **85102390.3**

(22) Anmeldetag: **04.03.85**

(54) **Monoazofarbstoffe, Verfahren zu ihrer Herstellung und ihre Verwendung.**

(30) Priorität: **06.03.84 DE 3408152**

(43) Veröffentlichungstag der Anmeldung: **25.09.85 Patentblatt 85/39**

(45) Bekanntmachung des Hinweises auf die Patenterteilung: **28.01.87 Patentblatt 87/5**

(84) Benannte Vertragsstaaten: **BE CH DE FR GB IT LI**

(56) Entgegenhaltungen:
**FR - A - 2 008 404**
**FR - A - 2 286 174**
**FR - A - 2 305 469**

(73) Patentinhaber: **CASSELLA Aktiengesellschaft, Hanauer Landstrasse 526, D-6000 Frankfurt am Main 61 (DE)**

(72) Erfinder: **Bühler, Ulrich, Dr., Kastanienweg 8, D-8755 Alzenau (DE)**
Erfinder: **Karsunky, Ulrich, Fliederweg 12, D-6257 Hünfelden (DE)**
Erfinder: **Roth, Kurt, Breckenheimer Strasse 35, D-6238 Hofheim (DE)**

(74) Vertreter: **Urbach, Hans-Georg, Dr. et al, Hanauer Landstrasse 526, D-6000 Frankfurt am Main 61 (DE)**

**EP 0 155 580 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft wertvolle Monoazofarbstoffe der Formel I

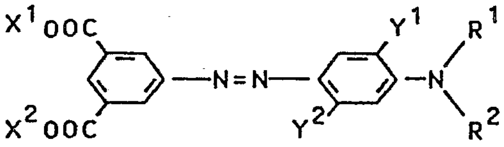

(I)

worin

$X^1$ und $X^2$ unabhängig voneinander Alkyl mit 1 bis 6 C-Atomen, das durch Chlor, Brom, Cyan, Hydroxy, Alkylcarbonyloxy mit 1 bis 3 C-Atomen in der Alkylgruppe, Alkoxycarbonyloxy mit 1 bis 4 C-Atomen in der Alkoxygruppe, Alkoxyalkoxycarbonyloxy mit 1 bis 4 C-Atomen in jeder Alkoxygruppe, Alkylaminocarbonyloxy mit 1 bis 4 C-Atomen in der Alkylgruppe, Phenyl oder Phenoxy monosubstituiert oder durch Hydroxy und/oder Alkylcarbonyloxy mit 1 bis 3 C-Atomen in der Alkylgruppe disubstituiert oder durch Hydroxy oder Alkylcarbonyloxy mit 1 bis 3 C-Atomen in der Alkylgruppe und Chlor oder Brom oder Phenoxy disubstituiert sein kann, Alkyl mit 3 bis 8 C-Atomen, dessen Kohlenstoffkette durch 1 bis 3 Sauerstoffatome unterbrochen ist und durch Hydroxy und/oder Alkylcarbonyloxy mit 1 bis 3 C-Atomen in der Alkylgruppe, Chlor oder Brom ein- oder zweifach substituiert sein kann, Cycloalkyl mit 5 oder 6 C-Atomen oder Alkenyl mit 3 bis 5 C-Atomen oder gegebenenfalls substituiertes Phenyl,

$Y^1$ Wasserstoff, Alkoxy mit 1 bis 4 C-Atomen, das durch Methoxy oder Ethoxy substituiert sein kann, Methyl, Ethyl, Chlor oder Brom,

$Y^2$ eine der Bedeutungen von $Y^1$ besitzt oder $-NHXR$,

X $-CO-$ oder $-SO_2-$,

R Alkyl mit 1 bis 3 C-Atomen, das durch Chlor, Brom, Methoxy oder Ethoxy substituiert sein kann, oder gegebenenfalls substituiertes Phenyl und für den Fall, dass X für $-CO-$ steht, auch Alkoxy mit 1 bis 4 C-Atomen, das durch Alkoxy mit 1 bis 4 C-Atomen substituiert sein kann, gegebenenfalls substituiertes Phenoxy, Alkylamino mit 1 bis 4 C-Atomen im Alkylrest oder Phenylamino, das gegebenenfalls im Phenylkern substituiert sein kann,

$R^1$ Wasserstoff, Alkyl mit 1 bis 6 C-Atomen, das durch Chlor, Brom, Cyan, Hydroxy, Alkylcarbonyloxy mit 1 bis 3 C-Atomen in der Alkylgruppe, Alkoxycarbonyloxy mit 1 bis 4 C-Atomen in der Alkoxygruppe, Alkoxyalkoxycarbonyloxy mit 1 bis 4 C-Atomen in jeder Alkoxygruppe, Alkylaminocarbonyloxy mit 1 bis 4 C-Atomen in der Alkylgruppe, gegebenenfalls substituiertes Phenylaminocarbonyloxy, Phenyl oder Phenoxy monosubstituiert oder durch Hydroxy und/oder Alkylcarbonyloxy mit 1 bis 3 C-Atomen in der Alkylgruppe oder durch Hydroxy oder Alkylcarbonyloxy mit 1 bis 3 C-Atomen in der Alkylgruppe und Chlor oder Brom oder Phenoxy disubstituiert sein kann, Alkenyl mit 3 bis 5 C-Atomen, Alkyl mit 3 bis 8 C-Atomen, dessen Kohlenstoffkette durch 1 bis 3 Sauerstoffatome unterbrochen ist und durch Hydroxy, Alkylcarbonyloxy mit 1 bis 3 C-Atomen in der Alkylgruppe, Chlor oder Brom ein- oder zweifach substituiert sein kann,

$R^2$ mit Ausnahme von Wasserstoff eine der Bedeutungen von $R^1$ besitzt oder Cycloalkyl mit 5 oder 6 C-Atomen, gegebenenfalls substituiertes Phenyl bedeuten, wobei jedoch in den Resten $X^1$, $X^2$, $Y^2$, $R^1$ und $R^2$ zusammen höchstens ein Phenylrest vorhanden ist.

Die Erfindung betrifft auch Verfahren zur Herstellung der Farbstoffe der Formel I sowie ihre Verwendung zum Färben und Bedrucken von hydrophoben Fasermaterialien oder ihrer Mischungen mit Cellulose.

Es sind bereits von Carbonsäure- bzw. Sulfonsäuregruppen freie Monoazofarbstoffe bekannt, bei denen in der sich von einem substituierten Anilin ableitenden Diazokomponente eine oder mehrere Carbonestergruppen direkt über C-C-Bindungen an den Phenylkern gebunden sind, so z.B. aus der DE-A1-25 14 530, DE-A1-26 12 790 und der FR-A1-20 08 404.

Diese bekannten Farbstoffe lassen jedoch noch zahlreiche Wünsche der Praxis offen, insbesondere im Hinblick auf die Applikation, bei der sich beispielsweise Mängel im Aufbau- und Ausziehvermögen, in der Temperatur-, pH- und Reduktionsempfindlichkeit, aber auch im Hinblick auf die Echtheiten der Färbungen, wie Licht-, Trockenhitzefixier-, Wasch-, Reib- und Wasserechtheiten und nicht zuletzt auf die Kosten der Färbung unter Berücksichtigung der Farbstärke zeigen. Die Farbstoffe der vorliegenden Erfindung tragen überraschenderweise den Bedürfnissen der Praxis in weit höherem Masse Rechnung als die bisher bekannten.

Darüber hinaus wurde überraschenderweise gefunden, dass sich die erfindungsgemässen Farbstoffe, insbesondere diejenigen mit der Bedeutung $X^1$ bzw. $X^2$ = gegebenenfalls substituiertes Alkyl mit 1 bis 4 C-Atomen oder Alkyl mit 3 bis 8 C-Atomen, dessen Kohlenstoffkette durch 1 bis 3 Sauerstoffatome unterbrochen ist und durch Hydroxy, Alkylcarbonyloxy mit 1 bis 3 C-Atomen in der Alkylgruppe, Chlor oder Brom ein- oder zweifach substituiert sein kann, ganz besonders zur Verwendung im alkalischen Ätzdruck auf Textilmaterialien, die hydrophobe Fasern, vorzugsweise Polyesterfasern, in überwiegendem Mass enthalten oder aus solchen Fasern bestehen, eignen. Der alkalische Ätzdruck ist ein Verfahren zur Herstellung von Ätzreservedrucken, wobei auf das Textilmaterial ein oder mehrere weissätzbare Dispersionsfarbstoffe und gegebenenfalls ein oder mehrere ätzbeständige Dispersionsfarbstoffe in Form einer Farbflotte oder Druckpaste aufgebracht und anschliessend vorsichtig angetrocknet oder getrocknet werden und danach eine alkalische Ätzreservedruckpaste in dem gewünschten Muster aufgedruckt wird, die gegebenenfalls zusätzlich einen oder mehrere ätzbeständige Dispersionsfarbstoffe enthalten kann, wobei die Reihenfolge des Aufdruckens der Ätzreservedruckpaste und die Druckpaste auch vertauscht sein und bei Verwendung einer Druckpaste das Antrocknen oder Zwischentrocknen auch entfallen kann, und anschliessende Wärmebehandlung bei 100 bis 230° C. Überraschend und von ganz besonderer technischer Bedeutung ist dabei, dass die erfindungsgemässen Farbstoffe auch reduktiv, d.h. z.B. mit Zinn-II-Chlorid oder Alkaliformaldehydsulfoxylat, ätzbar sind.

Alkyl- und Alkenylreste können, auch wenn sie Teile anderer Reste darstellen, geradkettig oder verzweigt sein.

Phenyl- oder Phenoxy-reste sind, auch wenn sie in Verbindung mit anderen Resten, z.B. als für R stehendes Phenylamino auftreten, in der Regel unsubstituiert. Sie können aber auch ein- oder mehrfach, z.B. durch Methyl, Chlor, Brom, Methoxy substituiert sein.

Für $X^1$, $X^2$, $R^1$ und $R^2$ können z.B. folgende Alkylreste stehen: Methyl, Ethyl, n-Propyl, i-Propyl, n-Butyl, i-Butyl, sek-Butyl, n-Pentyl, i-Pentyl, n-Hexyl, 2-Ethylbutyl. Für $X^1$, $X^2$, $R^1$ und $R^2$ können z.B. folgende mono- und disubstituierte Alkylreste stehen: 2-Chlor-, 2-Brom- oder 2-Cyanethyl, 2- oder 3-Chlor-, -Brom- oder -Cyanpropyl; 2-, 3- oder 4-Chlor-, -Brom- oder -Cyanbutyl; 2,3-Dihydroxypropyl, 2-Hydroxy-3-chlorpropyl; 2-Hydroxyethyl, 2- oder 3-Hydroxypropyl, 1-Hydroxypropyl-2, 2-, 3- oder 4-Hydroxybutyl, 1-, 3- oder 4-Hydroxybutyl-2; Benzyl, 2-Phenylethyl, 3-Phenylpropyl, 4-Phenylbutyl, 4-Phenylbutyl-2; 2-Phenoxyethyl, 3-Phenoxypropyl, 4-Phenoxybutyl, 2-Phenoxybutyl, 1-Phenoxybutyl-2, 2-Hydroxy-3-phenoxypropyl, 2-Hydroxy-4-phenoxybutyl, 3-Hydroxy-2-phenoxy-butyl; 2-Acetoxyethyl, 2-Propionyloxy-ethyl, 2-n-Butyryloxyethyl, 2-i-Butyryloxy-ethyl, 2- oder 3-Acetoxypropyl, 2- oder 3-n-Propionyloxy-propyl, 2- oder 3-i-Propionyloxy-propyl, 2- oder 3-n-Butyryloxy-propyl, 2- oder 3-i-Butyryloxy-ethyl, 1-Acetoxy-propyl-2, 2-, 3- oder 4-Acetoxy-butyl, 2-, 3- oder 4-n-Propionyloxy-butyl, 2-, 3- oder 4-i-Propionyloxy-butyl, 2-, 3- oder 4-n-Butylryloxybutyl, 1-, 3- oder 4-Acetoxy-butyl-2, 1-, 3- oder 4-n-Propionyloxy-butyl-2, 1-, 3- oder 4-i-Propionyloxy-butyl-2, 1-, 3- oder 4-n-Butyryloxy-butyl-2, 2-, 3- oder 4-i-Butyryloxy-butyl-2, 2,3-Diacetoxy-propyl, 2,3-Dipropionyloxy-propyl, 2,3-Din-butyryloxy-propyl, Methoxy-, Ethoxy-, n-Propoxy- oder i-Propoxy-carbonyloxy-ethyl, Methoxyethoxy-, Ethoxyethoxy-, Methoxy-n-propoxy-, n-Propoxy-n-propoxy-carbonyloxy-ethyl, Acetyl-, Propionyl-, Butyryl-, i-Butyryl-aminocarbonyloxy.

Für $X^1$, $X^2$, $R^1$ und $R^2$ können z.B. folgende Alkylreste mit 3 bis 8 C-Atomen stehen, deren Kohlenstoffkette durch 1 bis 3 Sauerstoffatome unterbrochen sind und die auch ein- oder zweifach substituiert sein können: Methoxy-, Ethoxy-, Propoxy- oder Butoxy-ethyl, -prop-3-yl, -but-4-yl, -but-3-yl oder -but-2-yl; Hydroxyethoxy-, Methoxyethoxy-, Propoxyethoxy-, Butoxyethoxyethyl, -prop-3-yl, -but-4-yl, -but-3-yl oder -but-2-yl, Hydroxyethoxyethoxy-ethyl, -prop-3-yl, -but-4-yl, -but-3-yl, -but-2-yl, Methoxyethoxyethoxyethyl, -prop-3-yl, Propoxyethoxyethoxyethyl, 2,3-Dihydroxypropoxy-ethyl, -prop-3-yl, -but-4-yl, -but-3-yl, -but-2-yl, 2-Hydroxy-3-chlorpropoxy-ethyl, 2-Hydroxy-3-methoxypropyl, 2-Hydroxy-3-ethoxy-propyl, 2-Hydroxy-3-butoxy-propyl, 2-Hydroxy-3-methoxyethoxypropyl, 2-Hydroxy-3-ethoxyethoxy-propyl, 2-Hydroxy-3-(3-methoxypropoxy)-propyl, 2-Hydroxy-3-(4-methoxybutoxy)-propyl, Acetoxy-, n-Propionyloxy-, i-Propionyloxy-, n-Butyryloxy-, i-Butyryloxy-ethoxy, Acetoxy-ethoxy-, n-Propionyl-oxyethoxy-, i-Propionyl-oxyethoxy, n-Butyryloxy-ethoxy-, i-Butyryloxy-ethoxy-ethyl, -prop-3-yl, -but-4-yl, -but-3-yl oder -but-2-yl, 2-Acetoxy-, 2-Propionyloxy- oder 2-Butyryloxy-3-methoxy-, -3-ethoxy-, -3-i-propoxy-, -3-n-butoxy-, -3-methoxyethoxy-, -3-ethoxyethoxy-phenoxypropyl; 2-Acetoxy- oder -Propionyl-3-chlor- oder -brompropyl.

Geeignete für $X^1$, $X^2$, $R^1$ und $R^2$ stehende Alkenylreste sind z.B.: Allyl, Methallyl, Crotyl.

Für $X^1$, $X^2$ und $R^2$ können darüber hinaus z.B. noch folgende Reste stehen: Cyclopentyl, Cyclohexyl, Phenyl, 2-, 3- oder 4-Methylphenyl, 2-, 3- oder 4-Chlor- oder -Bromphenyl oder 4-Methoxyphenyl.

Für R können beispielsweise stehen: Methyl, Ethyl, n-Propyl, i-Propyl, Chlormethyl oder 2-Chlorethyl, Brommethyl oder 2-Bromethyl, Hydroxy-, Methoxy- oder Ethoxy-methyl oder 2-Hydroxy-, 2-Methoxy-, 2-Ethoxy-ethyl oder 3-Hydroxypropyl, Phenyl, 4-Methylphenyl oder 4-Chlorphenyl. Wenn X die Bedeutung $-CO-$ hat, kann R beispielsweise ferner auch stehen für Methoxy, Ethoxy, n-Propoxy, i-Propoxy, n-Butoxy, i-Butoxy, sek-Butoxy, 2-Methoxyethoxy, 2-Ethoxyethoxy- 2-(n-Propoxy)-ethoxy, 2-(i-Propoxy)-ethoxy, 2-(n-butoxy)-ethoxy, 3-Methoxypropoxy, 4-Methoxy-butoxy, 4-Ethoxybutoxy.

Bevorzugte Reste $X^1$, $X^2$ und $R^2$ sind gegebenenfalls substituierte Alkylreste mit 1 bis 4 C-Atomen.

Bevorzugte Kombinationen $Y^1$ und $Y^2$ sind: $Y^1 = H$ und $Y^2 = H, Cl, Br, CH_3, OCH_3, NHXR$; $Y^1 = CH_3, OCH_3$ und $Y^2 = H, CH_3, OCH_3$ sowie $Y^1 = CH_3, OCH_3, OC_2H_5, Cl, O(CH_2)_2OCH_3$ oder $O(CH_2)_2OC_2H_5$ und $Y^2 = -NHXR$.

Bevorzugte Farbstoffe besitzen eine Kombination bevorzugter Merkmale.

Bevorzugte Reste $X^1$, $X^2$, $R^1$ und $R^2$ von im alkalischen Ätzreservedruck einsetzbaren erfindungsgemässen Farbstoffen sind Alkoxy($C_1$-$C_4$)-ethyl-reste und substituierte Alkylreste mit 1 bis 4 C-Atomen. Bevorzugte Alkylsubstituenten sind dabei Hydroxy, Alkylcarbonyloxy mit 1 bis 3 C-Atomen in der Alkylgruppe und Cyan.

Die erfindungsgemässen Farbstoffe lassen sich in an sich bekannter Weise herstellen, indem man ein Amin der Formel II diazotiert und auf ein Amin der Formel III kuppelt:

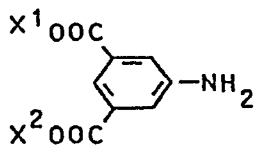 (II) 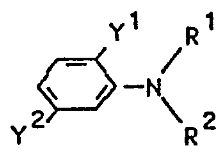 (III)

Die Diazotierung des Amins der Formel II erfolgt durch Einwirkung von salpetriger Säure oder salpetrige Säure abspaltende Verbindungen. Beispielsweise kann das Amin der Formel II in Schwefelsäure, Salzsäure oder in niederen aliphatischen Carbonsäuren, wie z.B. Essigsäure oder Propionsäure, gelöst werden und bei 0 bis 60° C durch Zusatz von Nitrosylschwefelsäure bzw. Natriumnitrit diazotiert werden. Die Kupplung wird im sauren wässerigen Medium, in einer niederen aliphatischen Carbonsäure, wie z.B. Essigsäure, die gegebenenfalls mit Wasser verdünnt ist, bzw. in einer Mischung aus Wasser und einem in Wasser wenig löslichen Alkohol, wie n- oder i-Butanol, bei Temperaturen von 0 bis 30° C ausgeführt. Bevorzugt wird hierbei der Temperaturbereich von 0 bis 15° C. Zur Vervollständigung der Kupplungsreaktion kann es zweckmässig sein, den pH-Wert des Kupplungsansatzes am Anfang oder gegen Ende der Reaktion durch Zusatz von Basen, wie z.B. von Natriumacetat, auf einen Wert von 3 bis 6 zu puffern. Die Isolierung des Farbstoffs erfolgt in der üblichen Weise durch Filtration.

Die Verbindungen der Formeln II und III sind bekannt oder lassen sich aus bekannten Handelsprodukten nach bekannten Verfahren herstellen.

Die erfindungsgemässen Farbstoffe werden in der für Dispersionsfarbstoffe üblichen Weise gefinisht und in Teig- oder Pulverform in den Handel gebracht.

Die erfindungsgemässen Farbstoffe eignen sich allein oder in Mischung untereinander oder in Mischung mit Farbstoffen anderer Farbstoffklassen insbesondere zum Färben und Bedrucken von hydrophoben Fasermaterialien, wie beispielsweise Polyamid, Cellulose-2 1/2-acetat, Cellulosetriacetat und insbesondere Polyestermaterialien, z.B. Polyethylenglykolterephthalat. Sie liefern hierauf nach üblichen Färbe- und Druckverfahren farbstarke, gelbe bis rote Färbungen und Drucke mit sehr guten Echtheitseigenschaften, insbesondere Licht-, Trockenhitzefixier-, Wasch-, Wasser- und Reibechtheiten.

Das Färben der genannten Fasern, die einzeln oder im Gemisch mit anderen Faserarten, wie z.B. Baumwolle, regenerierten Cellulosefasern oder Wolle, vorliegen können, mit den erfindungsgemässen Farbstoffen erfolgt zweckmässig aus wässeriger Suspension in Gegenwart von Carriern zwischen etwa 80 bis 100° C, in Abwesenheit von Carriern zwischen etwa 110 bis 140° C sowie nach dem sogenannten Thermofixierverfahren bei etwa 180 bis 230° C. Das Bedrucken der genannten Materialien kann so durchgeführt werden, dass die mit den neuen Farbstoffen bedruckte Ware in Gegenwart eines Carriers bei Temperaturen zwischen etwa 80 bis 110° C oder auch in Abwesenheit eines Carriers bei etwa 110 bis 180° C gedämpft oder auch nach dem sogenannten Thermofixierverfahren bei etwa 180 bis 230° C behandelt wird.

Die erfindungsgemässen Farbstoffe eignen sich auch zum Färben der vorstehend aufgeführten hydrophoben Materialien aus organischen Lösungsmitteln und zum Färben in der Masse.

Die erfindungsgemässen Farbstoffe, insbesondere diejenigen mit der Bedeutung $X^1$ oder $X^2$ Alkyl mit 1 bis 4 C-Atomen, das gegebenenfalls substituiert sein kann, eignen sich darüber hinaus auch als weissätzbare Farbstoffe besonders zur Herstellung von Ätzreservedrucken nach dem alkalischen Ätzreservedruckverfahren.

Die Durchführung des Ätzreservedruckverfahrens erfolgt dadurch, dass die erfindungsgemässen weissätzbaren Farbstoffe der Formel I auf das Textilmaterial in Form von Farbflotten oder Druckpasten aufgebracht werden. Bei Verwendung einer Farbflotte wird das Textilmaterial dabei z.B. in an sich bekannter Weise imprägniert, z.B. geklotzt oder gepflascht. Die Farbflotten oder Druckpasten können dabei einen oder mehrere der erfindungsgemässen weissätzbaren Farbstoffe der Formel I neben bekannten üblichen Färberei- bzw. Druckhilfsmitteln, wie beispielsweise Dispergiermitteln, Netzmitteln, Schaumdämpfungsmitteln und Klotzhilfsmitteln, enthalten. Das imprägnierte Textilmaterial wird auf eine Flottenaufnahme von 50 bis 120% abgequetscht. Anschliessend werden die so behandelten Textilmaterialien so vorsichtig getrocknet, dass noch keine Farbstoff-Fixierung in der Faser stattfindet. Dies kann z.B. durch Warmluft mit eventuell vorausgehender Infrarotstrahlung erfolgen, wobei die Temperatur ca. 60 bis 80° C, maximal etwa 100° C bei entsprechender Verkürzung der Zeit, beträgt. Die so vorbereiteten Gewebebahnen werden dann mit einer Ätzreservedruckpaste mustermässig bedruckt, die als Ätzmittel eine Base, die in 5%iger wässeriger Lösung einen pH-Wert von mindestens 8 hervorbringt, sowie die in Druckpasten für den Textildruck üblichen bekannten Zusatzstoffe, insbesondere Verdickungsmittel, enthält.

Anschliessend werden die imprägnierten und bedruckten Textilmaterialien einer Wärmebehandlung zwischen 100 bis 230° C unterworfen. Im unteren Temperaturbereich bis ca. 130° C erfolgt die Wärmezufuhr vorzugsweise durch Druckdampf. Für Wärmebehandlungen, die zwischen 160 und 230° C durchgeführt werden, wird als Wärmeträger vorzugsweise überhitzter Dampf oder Heissluft verwendet. Bei der Verwendung von Dampf für die Wärmebehandlung wird vor der Wärmebehandlung eine Trocknung bei 60° C bis 80° C, z.B. mit Warmluft mit eventuell vorausgehender Infrarotstrahlung, durchgeführt.

Nach der Wärmebehandlung, die eine Fixierung der Dispersionsfarbstoffe an den nicht mit Ätzreservedruckpaste überdruckten Stellen sowie die Zerstörung der Dispersionsfarbstoffe an den mit der Ätzreservedruckpaste bedruckten Stellen zur Folge hat, werden die Textilmaterialien in der üblichen Art und Weise nachbehandelt, heiss und kalt gespült und getrocknet.

Eine besondere Ausführungsform des erfindungsgemässen Verfahrens besteht darin, dass die Farbflotte ausser den weissätzbaren Farbstoffen der Formel I zusätzlich einen oder mehrere Dispersionsfarbstoffe enthält, die alkalibeständig sind und somit durch die Ätzreservedruckpasten nicht

zerstört werden. Verfährt man im übrigen wie oben angegeben, so erhält man mehrfarbige Dessins.

Man kann die weissätzbaren Farbstoffe der Formel I auch in Form von Druckpasten auf das Textilmaterial aufdrucken und anschliessend mit der Ätzreservedruckpaste in dem gewünschten Muster überdrucken. Ein Antrocknen oder Zwischentrocknen zwischen den beiden Druckvorgängen ist dabei nicht unbedingt erforderlich, so dass auch nass-in-nass gearbeitet werden kann. Die Fixierung und Fertigstellung der Textildrucke erfolgt dann anschliessend wie oben bereits beschrieben. Auch bei diesem Verfahren ist es möglich, der als erstes aufgedruckten Farbdruckpaste, die auch mehrere weissätzbare Farbstoffe enthalten kann, einen oder mehrere Dispersionsfarbstoffe zuzusetzen, die alkali- und damit ätzmittelresistent sind. Auch in diesem Fall werden mehrfarbige Dessins erhalten. Eine weitere Möglichkeit zur Durchführung des Ätzreservedruckverfahrens besteht darin, dass auf den mit weissätzbaren Dispersionsfarbstoffen imprägnierten oder bedruckten Fond Ätzreservedruckpasten der genannten Art aufgedruckt werden, die ihrerseits einen oder mehrere alkaliresistente Dispersionsfarbstoffe enthalten. Bei anschliessender Fixierung und Fertigstellung der Textilmaterialien, wie oben beschrieben, werden auch hier mehrfarbige Dessins erhalten.

Schliesslich ist es auch möglich, auf das Textilmaterial zuerst eine Ätzreservedruckpaste in dem gewünschten Muster aufzudrucken und das so bedruckte Textilmaterial nach Antrocknen oder Zwischentrocknen oder ohne Antrocknen oder Zwischentrocknen, also «nass-in-nass» mit einer Druckpaste, zu überdrucken, die einen oder mehrere weissätzbare Farbstoffe enthält. Das so behandelte Textilmaterial wird zur Fixierung des Farbstoffs an den nicht mit Ätzreservedruckpaste belegten Stellen und zur Zerstörung des Farbstoffs an den mit Ätzreservedruckpaste belegten Stellungen der bereits oben genannten Wärmebehandlung unterworfen und, wie bereits oben angegeben, fertiggestellt. Dabei werden mehrfarbige Muster dann erhalten, wenn die Ätzreservedruckpaste zusätzlich noch einen oder mehrere ätzbeständige Dispersionsfarbstoffe und/oder die Druckpaste zusätzlich zu einem oder mehreren weissätzbaren Dispersionsfarbstoffen noch einen oder mehrere alkali- und damit ätzmittelbeständige Dispersionsfarbstoffe enthält.

Die Farbstoffe der Formel I liegen in den Klotzflotten bzw. in den Druckpasten in fein dispergierter Form vor, wie es für Dispersionsfarbstoffe üblich und bekannt ist. Auch die Herstellung der Klotzflotten bzw. Druckpasten erfolgt in an sich bekannter Weise durch Mischen der Flotten- bzw. Druckpastenbestandteile mit der nötigen Menge Wasser und flüssigen feindispersen oder festen redispergierbaren Einstellungen der Farbstoffe der Formel I.

Alkaliresistente Dispersionsfarbstoffe, die zur Herstellung von mehrfarbigen Dessins mit dem Farbstoff der Formel I kombiniert werden können, sind die bekannten Handelsfarbstoffe aus der Gruppe der Azo- oder Azomethin-, Chinophthalon-, Nitro- oder Anthrachinonfarbstoffe. Einige Beispiele für alkaliresistente Dispersionsfarbstoffe sind: C.I. Disperse Yellow 64, C.I. Disperse Orange 130, C.I. Disperse Red 60, C.I. Disperse Red 183, C.I. Disperse 56.

Basen, die als Ätzmittel in der Ätzreservedruckpaste enthalten sind und die in 5%iger wässeriger Lösung mindestens einen pH-Wert von 8 hervorbringen, sind in grosser Zahl bekannt. Beispiele für solche Basen sind die Hydroxide der Alkali- und Erdalkalimetalle, Salze von Erdalkali- und Alkalimetallen mit schwachen organischen oder anorganischen Säuren, wie z.B. Alkaliacetate, Alkalicarbonate oder -bicarbonate, Trialkaliphosphate, Ammoniak oder auch aliphatische Amine, wie z.B. Triethyl-, Tripropyl- oder Tributylamin, Ethanolamin, Dimethyl- oder Diethylethanolamin, Diethanolamin, Methyl-, Ethyl- oder Propyldiethanolamin oder Triethanolamin. Üblicherweise werden als Basen Erdalkalihydroxide, wie z.B. Calciumhydroxid, Alkalihydroxide, wie beispielsweise Natrium- oder Kaliumhydroxyd, oder Alkalisalze von schwachen anorganischen Säuren, wie beispielsweise Natriumcarbonat oder Trinatriumphosphat, eingesetzt. Vorzugsweise wird als Base in den Ätzreservedruckpasten Natrium- oder Kaliumhydroxid oder insbesondere Natrium- oder Kaliumcarbonat oder Natrium- oder Kaliumbicarbonat verwendet. Auch Mischungen verschiedener Basen können verwendet werden. Die Konzentration der Base in den Ätzreservedruckpasten beträgt zweckmässigerweise 25 bis 250 g/kg, vorzugsweise 50 bis 130 g/kg. Die Ätzreservedruckpasten enthalten neben den genannten Basen die üblichen, in Textildruckpasten enthaltenen Zusätze, insbesondere Verdickungsmittel, wie z.B. Alginate, Stärkeprodukte, synthetische polymere Verdickungsmittel, Mineralöle, hydrotrope Substanzen, wie beispielsweise Harnstoff, sowie Zusätze, welche die Benetzung, Durchdringung und Farbstoffaufnahme fördern. Besonders günstig für den Ätzvorgang ist die Anwesenheit nichtionogener Detergenzien, die zweckmässigerweise in den Ätzreservedruckpasten enthalten sind, wie z.B. Glycerin und/oder Polyglykole, wie Polyethylenglykol mit einem mittleren Molekulargewicht von 300 bis 400.

Nach dem beschriebenen alkalischen Ätzdruckverfahren lassen sich Ätzreservedrucke nicht nur auf Textilmaterialien aufbringen, die aus hydrophoben Fasern, insbesondere Polyesterfasern, bestehen oder solche Fasern überwiegend enthalten, sondern auch auf Textilmaterialien, die hydrophobe Fasern, insbesondere Polyesterfasern, und Cellulosefasern in vergleichbaren Mengeverhältnissen enthalten. Derartige Polyester/Cellulose-Mischgewebe können z.B. ein Gewichtsverhältnis Polyester/Cellulose von 75:25, 65:35 oder 50:50 aufweisen. Das Aufbringen von Ätzreservedrukken auf derartige Mischgewebe nach dem genannten Verfahren ist dann möglich, wenn die Farbflotte oder Druckpaste, welche mindestens einen weissätzbaren Dispersionsfarbstoff der Formel I und gegebenenfalls noch einen oder mehrere ätzmittelbeständige Dispersionsfarbstoffe enthält,

ausserdem noch mindestens einen ätzbaren Reaktivfarbstoff mit einem reaktiven Rest der Formel

$$-SO_2-CH_2-CH_2-Hal \quad (IV)$$

oder

$$-SO_2-CH_2-CH_2-OSO_3X \quad (V)$$

oder

$$-NH-SO_2-CH_2-CH_2-OSO_3X \quad (VI)$$

oder

$$-SO_2-CH=CH_2 \quad (VII)$$

worin X Wasserstoff oder ein Metallkation, insbesondere das Natriumkation, und Hal Halogen, insbesondere Chlor oder Brom, bedeuten, und gegebenenfalls einen oder mehrere ätzbeständige Reaktivfarbstoffe enthält und wenn die Ätzreservedruckpaste neben Alkalicarbonat oder Alkalihydrogencarbonat ein Alkalisulfit oder Alkalihydrogensulfit und gegebenenfalls einen Aldehyd enthält und wenn im übrigen wie bereits angegeben gearbeitet wird.

Die einzusetzenden ätzbaren Reaktivfarbstoffe enthalten einen der oben angegebenen faserreaktiven Reste der Formeln IV bis VII. Den Resten der Formeln IV bis VI ist es gemeinsam, dass sie in Gegenwart von Alkali unter Abspaltung eines Sulfat- oder Halogenidanions eine Vinylsulfonylgruppe ausbilden. Diese in Gegenwart von Alkali gebildete Gruppe fixiert auf Baum- oder Zellwolle in gleicher Weise wie der direkt an den Farbstoffrest gebundene Vinylsulfonylrest der Formel VII durch Addition einer OH-Gruppe der Cellulose an die Vinyldoppelbindung. Ätzbare Reaktivfarbstoffe, die einen der oben genannten reaktiven Reste aufweisen, können allen technisch wichtigen Farbstoffgruppen angehören. Als Beispiele für geeignete Reaktivfarbstoffe werden die Monoazofarbstoffe C.I. Yellow 13 bis 17 und 72 bis 74, Orange 7, 15, 16, 23, 24, 55, Red 21 bis 23, 35, 36, 50, 63, 103 bis 107, 112 bis 114, Blue 28, Brown 16; die Disazofarbstoffe C.I. Blue 76, Blue 98, Black 5, 31; die Mono- bzw. Disazo-Metallkomplex-Farbstoffe C.I. Violet 4, 5, Blue 20, Brown 18; die Anthrachinonfarbstoffe C.I. Violet 22, Blue 19 und 27; die Phthalocyaninfarbstoffe C.I. Blue 21, 38, 77, 91 und Green 14 genannt. Besonders bevorzugt sind als ätzbare Reaktivfarbstoffe solche, die als Reaktivanker mindestens einen faserreaktiven Rest der Formel IV oder VI enthalten.

Die Mengen der Dispersions- und Reaktivfarbstoffe, die bei der Behandlung von Mischgeweben in den Klotzflotten oder Druckpasten enthalten sind, werden wie üblich auf die Farbtiefe der gewünschten Färbung und Intensität des Reaktiveffekts abgestimmt. Ausserdem entspricht die Menge der für eine der beteiligten Faserarten geeigneten Farbstoffe auch dem Massenanteil dieser Faserart an der gesamten Fasermasse. So enthält z.B. eine Klotzflotte, die für eine Fondfärbung bestimmter Farbnuance zubereitet wird, im Fall, dass das Mischgewebe überwiegend Cellulosefasern enthält, einen hohen Anteil an ätzbaren und gegebenenfalls nicht ätzbaren Reaktivfarbstoffen und einen niedrigen Anteil ätzbarer und gegebenenfalls nicht ätzbarer Dispersionsfarbstoffe im Fall, dass das Substrat überwiegend Polyesterfasern enthält, einen hohen Anteil oder nur Dispersionsfarbstoffe und einen niedrigen Anteil oder keine Reaktivfarbstoffe.

Falls bei der Durchführung des Ätzdruckverfahrens die Klotzflotte oder Druckpaste neben einem oder mehreren ätzbaren Dispersionsfarbstoffen der Formel I auch einen oder mehrere ätzbare Reaktivfarbstoffe mit reaktiven Resten der Formel IV bis VII enthält, wird eine Ätzreservedruckpaste verwendet, die neben Alkalicarbonat oder Alkalihydrogencarbonat noch ein Alkalisulfit oder Alkalihydrogensulfit als Reservierungsmittel für die Reaktivfarbstoffe enthält. Das Alkalihydrogensulfit kann auch durch eine äquivalente Menge eines Alkalihydrogensulfit-Aldehydadduktes ganz oder teilweise ersetzt werden. Es ist auch möglich, dieses Addukt in der Reservedruckpaste selbst zu erzeugen, indem man der Reservedruckpaste Alkalihydrogensulfit, Alkalihydrogencarbonat und einen Aldehyd zusetzt. Als Alkalisulfit, Alkalihydrogensulfit und Alkalihydrogencarbonat sind für den technischen Einsatz insbesondere die Natrium- oder Kaliumsalze, vorzugsweise die Natriumsalze, geeignet. Als Aldehyde, die als Alkalihydrogensulfitaddukte in den Reservedruckpasten enthalten sein können, kommen prinzipiell alle technisch gut zugänglichen, wie z.B. Formaldehyd, Acetaldehyd, Glyoxal, Benzaldehyd, in Betracht. Da die Aldehyd-Alkalihydrogensulfitaddukte mit den Einzelkomponenten des Addukts im Gleichgewicht stehen, sind solche Aldehyde bevorzugt, die im freien Zustand keinen zu hohen Dampfdruck aufweisen und somit nicht Anlass zu Geruchsbelästigungen geben können. Besonders geeignet ist beispielsweise Glyoxal.

Besondere Vorteile bei der Zubereitung von Druckpasten, die Natriumhydrogensulfit in Kombination mit einem Aldehyd enthalten, bietet der Einsatz von separat hergestellten Additionsverbindungen dieser beiden Komponenten. So lässt sich beispielsweise durch den Einsatz eines solchen Addukts das lästige Schäumen, das bei der Herstellung von Alkalihydrogencarbonat enthaltenden Druckpasten in ungünstigen Fällen auftreten kann, vermeiden. Die Konzentration der Summe der Reservierungsmittel in den Druckpasten beträgt zweckmässigerweise 25 bis 250 g/kg, vorzugsweise 50 bis 130 g/kg.

Die Verfahrensschritte bei der Herstellung von Ätzreservedrucken auf Polyester/Cellulose-Mischgeweben sind, abgesehen von der anderen Zusammensetzung der Klotzflotte oder Druckpaste und der Ätzreservedruckpaste, die gleichen wie bei der Behandlung von Geweben, die aus Polyester bestehen oder Polyester überwiegend enthalten. Allerdings ist es bei der Herstellung von Ätzreservedrucken auf Polyester/Cellulose-Mischgewebe nach dem Klotzen bzw. Bedrucken

des Gewebes, Trocknen oder Antrocknen und anschliessendem Überdrucken mit der Ätzreservedruckpaste zweckmässig, die geklotzten und bedruckten textilen Flächengebilde einer Wärmebehandlung zwischen 100 und 190° C zu unterwerfen und dabei die Wärmezufuhr vorzugsweise durch überhitzten Wasserdampf vorzunehmen. Die Hitzebehandlung bewirkt a) an den mit der Ätzreservedruckpaste bedruckten Stellen eine Inhibierung der ätzbaren Dispersions- und Reaktivfarbstoffe und eine Fixierung der gegebenenfalls vorhandenen, nicht reservierbaren Dispersions- und Reaktivfarbstoffe, b) an den nicht mit Ätzreservedruckpaste bedruckten Stellen eine Fixierung der Dispersionsfarbstoffe und, sofern die Klotzflotte oder Druckpaste ein Alkaliformiat enthalten hat, auch gleichzeitig eine Fixierung der Reaktivfarbstoffe. Hierbei ist unter Inhibierung des Farbstoffs die durch das Reservierungsmittel hervorgerufene Änderung des Farbstoffmoleküls zu verstehen, die dazu führt, dass der betreffende Farbstoff das Substrat nicht mehr anfärbt. Bei dem Zweiphasen-Verfahren, d.h. sofern die Klotzflotte oder Druckpaste kein Alkaliformiat enthalten hat, erfolgt anschliessend die Fixierung der Reaktivfarbstoffe in der Fondfärbung, d.h. an den nicht mit Ätzreservedruck bedruckten Stellen, in an sich bekannter Weise. Zum Schluss werden die Färbungen bzw. Drucke auf den Mischgeweben heiss und kalt gespült und getrocknet.

Die Klotzflotte oder Druckpaste kann ausser ätzbaren Dispersions- und Reaktivfarbstoffen zusätzlich ätzbeständige Dispersions- und Reaktivfarbstoffen enthalten, die somit durch die Ätzreservedruckpasten nicht zerstört werden. Verfährt man im übrigen wie oben angegeben, so erhält man mehrfarbige Dessins. Eine weitere Möglichkeit zur Durchführung des Ätzdruckverfahrens bei Mischgeweben besteht darin, dass auf den mit reservierbaren Farbstoffen geklotzten oder bedruckten Fond Ätzreservedruckpasten aufgedruckt werden, die ihrerseits gegen das Reservierungsmittel resistente Dispersions- und Reaktivfarbstoffe enthalten. Bei anschliessender Fixierung und Fertigstellung der Textilmaterialien, wie oben beschrieben, werden auch hier mehrfarbige Dessins erhalten.

Gegen das Reservierungsmittel beständige Reaktivfarbstoffe, die zur Herstellung von mehrfarbigen Dessins auf Polyester/Cellulose-Mischgeweben mit den ätzbaren Reaktivfarbstoffen kombiniert werden können, sind die bekannten Handelsfarbstoffe aus der Gruppe der Azo- oder Azomethin-, Chinophthalon-, Nitro- oder Anthrachinonfarbstoffe, die als faserreaktiven Rest einen aus der Klasse der Triazine, Chinoxaline, Phthalazine, Pyridazine, Pyrimidine oder der alpha,beta-ungesättigten aliphatischen Carbonsäuren enthalten. Stellvertretend für die gesamte Klasse seien im folgenden die wichtigsten Verbindungen genannt, von denen sich die faserreaktiven Reste der gegen das Ätzmittel beständigen Reaktivfarbstoffe ableiten: Cyanurchlorid, Cyanurbromid, Cyanurfluorid, Dihalogen-mono-amino-triazine, wie 2,6-Dichlor-4-amino-triazin, 2,6-Dichlor-4-methylamino-triazin, 2,6-Dichlor-4-oxethyl-amino-triazin, 2,6-Dichlor-4-phenylamino-triazin, 2,6-Dichlor-4-(o-, m- oder p-sulfophenyl)-amino-triazin, Dihalogenalkoxy- und aryloxy-sym.-triazine, Tetrahalogen-pyrimidine, 2,4,6-Trihalogenpyrimidine. Derivate heterocyclischer Carbon- oder Sulfonsäuren, wie 3,6-Dichlor-pyridazin-4-carbonsäurechlorid, 2,4-Dichlorpyrimidin-5-carbonsäurechlorid, 2,4,6-Trichlorpyrimidin-5-carbonsäurechlorid, 4,5-Dichlor-6-pyridazonylpropionylchlorid, 1,4-Dichlorphthalazin-6-carbonsäurechlorid, 5,6-Dichlor-4-methyl-2-methylsulfonylpyrimidin, 2- oder 3-Monochlorchinoxalin-6-carbonsäurechlorid oder -6-sulfonsäurechlorid, 2,3-Dichlorchinoxalin-6-carbonsäurechlorid oder -6-sulfonsäurechlorid, 1,4-Dichlorphthalazin-6-carbonsäurechlorid oder -6-sulfonsäurechlorid, 2,4-Dichlorchinazolin-6- oder -7-carbonsäurechlorid, oder -sulfonsäurechlorid, 2-Chlorbenzthiazol-5- oder -6-carbonsäurechlorid oder -5- oder -6-sulfonsäurechlorid, 2-Methylsulfonyl- oder 2-Ethylsulfonyl- oder 2-Phenylsulfonylbenzthiazol-5- oder -6-sulfonsäurechlorid, Acrylsäurechlorid und 3-Chlorpropionsäurechlorid.

Gegenüber anderen alkalisch weissätzbaren Farbstoffen besitzen die erfindungsgemässen weissätzbaren Farbstoffe den Vorteil der geringeren pH-Empfindlichkeit. Dies bedeutet wesentlich grössere Sicherheiten bei der praktischen Anwendung der Farbstoffe, sowohl bei den normalen Färbe- und Druckverfahren als auch bei alkalischen Ätzdruckverfahren selbst, wobei bei stark pHempfindlichen Farbstoffen bereits geringe Mengen von Alkali, die beim Rouleaux-Druckverfahren von der Walze auf den Fond übertragen werden können, dort wolkige Fondfärbungen hervorrufen.

Die folgenden Ausführungsbeispiele veranschaulichen die Herstellung der erfindungsgemässen Farbstoffe und Möglichkeiten zu ihrer Anwendung. Wenn nichts anderes angegeben, bedeuten dabei Teile Gewichtsteile und Prozente Gewichtsprozente.

*Beispiel 1:*

a) 20,9 g 5-Aminoisophthalsäure-dimethylester werden in 100 ml Eisessig bei 15 bis 20° C mit 33,0 g 41%iger Nitrosylschwefelsäure diazotiert. Die 1 h nachgerührte Diazolösung wird auf 9,5 g N,N-Di-(2-hydroxyethyl)-anilin, das in 100 ml 50%iger Essigsäure gelöst wurde, in Gegenwart von 33,0 g wasserfreiem Natriumacetat und 1 g Amidosulfonsäure gekuppelt, nachdem die Kupplerlösung durch Zugabe von 200 g Eis abgekühlt worden war. Während der Diazozugabe wird die Temperatur durch Zugabe von 200 g Eis gehalten. Nach einstündigem Nachrühren wird der entstandene Farbstoff abgesaugt, mit Wasser neutral und salzfrei gewaschen und unter vermindertem Druck getrocknet. Man erhält auf diese Weise 19,2 g eines Farbstoffs der Formel I, der sich in Essigsäureethylester mit gelber Farbe löst, bei 115° C schmilzt und folgende Reste besitzt:

$$X^1 = X^2 = -CH_3, Y^1 = Y^2 = -H, R^1 = R^2 = -CH_2CH_2OH.$$

b) 10 Teile des in Abschnitt a) hergestellten Farbstoffs werden in feiner Verteilung zu einer Klotzflotte gegeben, die 905 Teile Wasser, 5 Teile Citronensäure und 60 Teile eines Polymerisationsprodukts auf Acrylsäurebasis als Antimigrationsmittel auf 1000 Teile enthält. Mit dieser Klotzflotte wird ein Gewebe aus Polyester auf der Basis von Polyethylenglykolterephthalat bei 20 bis 30° C mit einem Abquetscheffekt von ca. 80% geklotzt. Das geklotzte Gewebe wird bei 60 bis 80° C vorsichtig getrocknet. Nach dem Trocknen wird mit einer Druckpaste, die 500 Teile einer wässerigen 10%igen Johanniskernmehletherverdickung, 260 Teile Wasser, 80 Teile calciniertes Natriumcarbonat, 80 Teile Polyethylenglykol 400 und 80 Teile Glycerin auf 1000 Teile enthält, überdruckt. Nach dem Fixieren mit überhitztem Dampf während 7 Minuten bei 175° C, reduktivem Nachbehandeln, Seifen, anschliessendem Spülen und Trocknen erhält man einen gelben Druck mit sehr guten Echtheiten, vor allem guter Licht-, Trockenhitzefixier-, Reib- und Waschechtheit. An den Stellen, auf die die sodahaltige Druckpaste aufgedruckt wird, erhält man einen sehr guten Weissfond mit scharfen Konturen.

*Beispiel 2:*

a) Wird die im Beispiel 1 hergestellte Diazolösung bei 0 bis 5° C auf eine Lösung aus 35,3 g N,N-Di(2-acetoxyethyl)-N'-propionylphenylendiamin-1,3 in 400 ml 50%iger Essigsäure in Gegenwart von 1 g Amidosulfonsäure gekuppelt und der Farbstoff nach dem Auskuppeln mit 400 g Eiswasser gefällt, abgesaugt, mit Wasser neutral gewaschen und unter vermindertem Druck getrocknet, so erhält man 51,7 g eines Farbstoffs der Formel I, der sich in Essigsäureethylester in goldgelber Farbe löst, bei 148° C schmilzt und die folgenden Reste besitzt:

$X^1 = X^2 = -CH_3, Y^1 = -H, Y^2 = -NHCOC_2H_5,$

$R^1 = R^2 = -CH_2CH_2O-COCH_3.$

b) 20,0 g des im Abschnitt a) hergestellten Farbstoffs werden in feiner Verteilung einer Druckpaste, die 45,0 g Johannisbrotkernmehl, 6,0 g 3-nitrobenzol-sulfonsaures Natrium und 3,0 g Zitronensäure auf 1000 g enthält, einverleibt. Mit dieser Druckpaste erhält man auf einem Polyestergewebe nach dem Bedrucken, Trocknen und Fixieren im Thermofixierrahmen während 45 Sekunden bei 195° C, Spülen und Fertigstellung einen farbstarken goldgelben Druck mit sehr guten coloristischen Eigenschaften.

*Beispiel 3:*

a) Werden 23,7 g 5-Amino-isophthalsäurediethylester wie in Beispiel 1 beschrieben diazotiert und bei 0 bis 5° C auf 19,8 g N-(2-Cyanethyl)-N-ethyl-m-toluidin in 1000 ml eiskalter 0,3 normaler Salzsäure gekuppelt, wobei die Temperatur durch Zugabe von 500 g Eis gehalten und der Farbstoff nach einstündigem Nachrühren durch Zutropfen einer Lösung von 90,0 g wasserfreiem Natriumacetat in 300 ml Wasser vollständig gefällt wird, so erhält man nach dem Isolieren, Waschen und Trocknen, wie in Beispiel 1 beschrieben, 40,0 g eines Farbstoffs der Forme I, der sich in Essigsäureethylester mit goldgelber Farbe löst, bei ca. 170° C schmilzt und die folgenden Reste besitzt:

$X^1 = X^2 = -C_2H_5, Y^1 = -H, Y^2 = -CH_3,$

$R^1 = -CH_2CH_2CN, R^2 = -C_2H_5.$

b) Ein Gewebe aus Polyethylenglykolterephthalat wird auf dem Foulard bei 30° C mit einer Flotte, die 10,0 g des in feiner Verteilung aufgebrachten Farbstoffs des Beispiels 3a, 10,0 g Polyacrylamid von K-Wert 120 und 0,5 g eines Polyglykolethers des Oleylalkohols und 988,5 g Wasser enthält, und mit Essigsäure auf pH 5 bis 6 eingestellt wurde, mit einer Flottenaufnahme von 50% geklotzt und getrocknet. Dann wird 60 Sekunden bei 210° C im Thermofixierrahmen fixiert. Nach anschliessendem Spülen, reduktiver Nachbehandlung, Spülen und Trocknen erhält man eine goldgelbe Färbung mit guten coloristischen Echtheiten.

Analog den Beispielen 1 bis 3 lassen sich die erfindungsgemässen Farbstoffe der folgenden Tabelle herstellen. Sie färben hydrophobe Fasern ebenfalls in vollen orangefarbenen bis gelben Nuancen mit ausgezeichneten Echtheiten.

In der letzten Spalte der Tabelle ist unter «N» die Nuance des Farbstoffs auf Polyester angegeben. Dabei bedeuten 1 = gelb, 2 = goldgelb, 3 = orange, 4 = rotstichig orange.

In der nachfolgenden Tabelle sind einige Reste wegen ihrer Länge über 2 Zeilen verteilt angegeben.

*TABELLE*

*Farbstoffe der Formel I*

| $X^1$ | $X^2$ | $Y^1$ | $Y^2$ | $R^1$ | $R^2$ | N |
|---|---|---|---|---|---|---|
| $CH_3$ | $CH_3$ | H | H | $C_2H_5$ | $C_2H_5$ | 1 |
| $CH_3$ | $CH_3$ | H | H | n-$C_4H_9$ | $(CH_2)_2CN$ | 1 |
| $C_2H_5$ | $C_2H_5$ | H | H | $C_2H_5$ | $(CH_2)_2OH$ | 1 |
| i-$C_3H_7$ | i-$C_3H_7$ | H | H | $C_2H_5$ | $(CH_2)_2OCOCH_3$ | 1 |
| $CH_3$ | $CH_3$ | H | H | $CH_3$ | $(CH_2)_2OC_6H_5$ | 1 |
| $C_2H_5$ | $C_2H_5$ | H | H | $(CH_2)_2OC_2H_5$ | $(CH_2)_2OC_2H_5$ | 1 |
| $CH_3$ | $CH_3$ | H | $CH_3$ | $(CH_2)_2OH$ | $(CH_2)_2OH$ | 2 |
| $CH_3$ | $CH_3$ | H | $CH_3$ | $(CH_2)_2OH$ | $(CH_2)_2CN$ | 2 |
| i-$C_3H_7$ | i-$C_3H_7$ | H | $CH_3$ | $(CH_2)_2C_6H_5$ | $(CH_2)_2CN$ | 2 |
| $C_2H_5$ | $C_2H_5$ | H | $CH_3$ | $(CH_2)_2OCOCH_3$ | $(CH_2)_2CN$ | 2 |
| $CH_3$ | $CH_3$ | H | $CH_3$ | $(CH_2)_2CN$ | $CH_2CH(OH)CH_2OH$ | 2 |
| $CH_3$ | $CH_3$ | H | Cl | $(CH_2)_2OH$ | $(CH_2)_2OH$ | 1 |
| n-$C_4H_9$ | n-$C_4H_9$ | H | $OCH_3$ | $(CH_2)_2O(CH_2)_2OCH_3$ | $(CH_2)_2O(CH_2)_2OCH_3$ | 2 |
| $CH_3$ | $CH_3$ | $CH_3$ | H | H | $(CH_2)_2OCOCH_3$ | 1 |
| $C_2H_5$ | $CH_3$ | $OCH_3$ | H | H | $(CH_2)_2OH$ | 1 |
| i-$C_3H_7$ | i-$C_3H_7$ | $CH_3$ | $CH_3$ | $(CH_2)_2OCOCH_3$ | $(CH_2)_2OCOCH_3$ | 2 |
| $CH_3$ | $CH_3$ | $OCH_3$ | $CH_3$ | H | $CH_2CH(OH)CH_2Cl$ | 3 |
| $C_2H_5$ | $C_2H_5$ | $OCH_3$ | $CH_3$ | $C_2H_5$ | $C_2H_5$ | 3 |
| i-$C_3H_7$ | i-$C_3H_7$ | $OCH_3$ | $OCH_3$ | H | $CH_2C_6H_5$ | 3 |
| $CH_3$ | $CH_3$ | H | $NHCOCH_3$ | $C_2H_5$ | $C_2H_5$ | 3 |
| n-$C_3H_7$ | n-$C_3H_7$ | H | $NHCOn$-$C_3H_7$ | $C_2H_5$ | $C_2H_5$ | 3 |
| $CH_3$ | $CH_3$ | H | $NHSO_2CH_3$ | n-$C_3H_7$ | n-$C_3H_7$ | 2 |
| $(CH_2)_2OCH_3$ | $(CH_2)_2OCH_3$ | H | $NHSO_2C_6H_5$ | $C_2H_5$ | $C_2H_5$ | 2 |
| $C_2H_5$ | $C_2H_5$ | H | $NHCOO(CH_2)_2OC_2H_5$ | $C_2H_5$ | $C_2H_5$ | 3 |
| $CH_3$ | $CH_3$ | H | $NHCOCH_3$ | $(CH_2)_2OH$ | $(CH_2)_2CN$ | 2 |
| $C_2H_5$ | $C_2H_5$ | H | $NHCOCH_3$ | $(CH_2)_2OCOCH_3$ | $(CH_2)_2CN$ | 2 |
| $CH_3$ | $CH_3$ | H | $NHCOCH_3$ | $(CH_2)_2CN$ | $CH_2CH=CH_2$ | 2 |
| $(CH_2)_2OCOCH_3$ | $(CH_2)_2OCOCH_3$ | H | $NHCOC_2H_5$ | $(CH_2)_2OCOCH_3$ | $(CH_2)_2OCOCH_3$ | 2 |
| $CH_3$ | $CH_3$ | H | $NHCOC_2H_5$ | $(CH_2)_2OH$ | $(CH_2)_2OH$ | 2 |
| $CH_3$ | $CH_3$ | H | $NHCOCH_3$ | $(CH_2)_2OH$ | $C_6H_{11}$ | 2 |
| $C_2H_5$ | $C_2H_5$ | $CH_3$ | $NHCOCH_3$ | H | $C_5H_9$ | 2 |
| $CH_3$ | $CH_3$ | $CH_3$ | $NHCOCH_3$ | H | $(CH_2)_2CN$ | 2 |
| $C_2H_5$ | $C_2H_5$ | $CH_3$ | $NHCOCH_3$ | H | $(CH_2)_2OC_6H_5$ | 3 |
| $CH_3$ | $CH_3$ | $OCH_3$ | $NHCOCH_3$ | $(CH_2)_2OCOCH_3$ | $(CH_2)_2OCO$-$CH_3$ | 3 |
| $CH_3$ | $CH_3$ | $OC_2H_5$ | $NHCOCH_3$ | $(CH_2)_2OH$ | $(CH_2)_2OH$ | 4 |
| n-$H_5H_{11}$ | $CH_3$ | H | H | H | $C_6H_5$ | 1 |
| $CH_3$ | $CH_3$ | H | $CH_3$ | $(CH_2)_2OH$ | $C_6H_5$ | 2 |
| $CH_3$ | $C_2H_5$ | H | $CH_3$ | $(CH_2)_2CN$ | $CH_2CH(OH)CH_2OC_2H_5$ | 2 |
| $C_6H_5$ | $C_2H_5$ | H | $CH_3$ | H | $(CH_2)_2O(CH_2)_2OC_2H_5$ | 1 |
| $C_6H_5$ | $CH_2CH=CH_2$ | H | $NHCOC_2H_5$ | $C_2H_5$ | $C_2H_5$ | 2 |
| $C_5H_9$ | $C_5H_9$ | H | $CH_3$ | $(CH_2)_2CN$ | n-$C_4H_9$ | 2 |
| $CH_2CH=CH_2$ | $CH_2CH=CH_2$ | H | $OC_2H_5$ | $(CH_2)_2CN$ | $(CH_2)_4OCH_3$ | 2 |

*TABELLE (Fortsetzung)*
*Farbstoffe der Formel I*

| $X^1$ | $X^2$ | $Y^1$ | $Y^2$ | $R^1$ | $R^2$ | N |
|---|---|---|---|---|---|---|
| $CH_2CH=CH_2$ | $CH_2CH=CH_2$ | Cl | $NHCOCH_3$ | H | $(CH_2)_2OC_6H_5$ | 2 |
| $(CH_2)_2OC_6H_5$ | $C_2H_5$ | $C_2H_5$ | $NHCOOC_2H_5$ | $(CH_2)OC_3H_7$ | $(CH_2)_2OC_3H_7$ | 3 |
| $(CH_2)_2Cl$ | $(CH_2)_2Cl$ | Br | $NHCOC_2H_5$ | H | $(CH_2)_4OH$ | 2 |
| $(CH_2)_2OCOCH_3$ | $(CH_2)_2OCOCH_3$ | H | $CH_3$ | H | $CH_2CH(OCOCH_3)CH_2OC_6H_5$ | 1 |
| $(CH_2)_4OH$ | $(CH_2)_4OH$ | H | $NHCOCH_3$ | $(CH_2)_2OH$ | $(CH_2)_2OH$ | 2 |
| $C_6H_5$ | $(CH_2)_2OH$ | H | $NHCOCH_3$ | H | $(CH_2)_2C_6H_5$ | 2 |
| sek-$C_4H_9$ | sek-$C_4H_9$ | H | $NHCOCH_2Cl$ | $(CH_2)_2CN$ | $C_2H_5$ | 2 |
| $C_2H_5$ | $C_2H_5$ | H | $NHCO(CH_2)_2Cl$ | $C_2H_5$ | $C_2H_5$ | 2 |
| $CH_3$ | $CH_3$ | H | $NHSO_2CH_2Cl$ | H | $(CH_2)_2C_6H_5$ | 2 |
| n-$C_3H_7$ | n-$C_3H_7$ | H | $NHSO_2C_6H_4$-$4CH_3$ | n-$C_3H_7$ | n-$C_3H_7$ | 2 |
| $(CH_2)_2OC_2H_5$ | $(CH_2)_2OC_2H_5$ | $CH_3$ | $NHCOC_2H_5$ | H | sek-$C_4H_9$ | 3 |
| $C_2H_5$ | $C_2H_5$ | $CH_3$ | $NHSO_2CH_3$ | H | $C_2H_5$ | 3 |
| $(CH_2)_2Cl$ | $(CH_2)_2Cl$ | $CH_3$ | $NHSO_2CH_3$ | H | $(CH_2)_2CN$ | 3 |
| $CH_3$ | $CH_3$ | $OCH_3$ | $NHCOCH_3$ | $(CH_2)_2OH$ | $(CH_2)_2CN$ | 4 |
| i-$C_3H_7$ | i-$C_3H_7$ | $OCH_3$ | $NHCOCH_3$ | $CH_2)_2OCOC_2H_5$ | $(CH_2)_2CN$ | 3 |
| $CH_2CH=CH_2$ | $CH_2CH=CH_2$ | $OCH_3$ | $NHSO_2CH_3$ | $(CH_2)_2OCOOCH_3$ | $(CH_2)_2OCOOCH_3$ | 3 |
| $(CH_2)_2OCOOCH_3$ | $(CH_2)_2OCOOCH_3$ | $OCH_3$ | $NHCOCH_3$ | $CH_2CH=CH_2$ | $(CH_2)_2CN$ | 4 |
| $(CH_2)_2OCOC_2H_5$ | $(CH_2)_2OCOC_2H_5$ | $OC_2H_5$ | $NHCOC_2H_5$ | H | i-$C_3H_7$ | 3 |
| $C_2H_5$ | $C_2H_5$ | $OC_2H_5$ | $NHCOCH_3$ | H | $(CH_2)_2OC_6H_5$ | 3 |
| $CH_3$ | $CH_3$ | $OC_2H_5$ | $NHCOOC_2H_5$ | $(CH_2)_2OC_2H_5$ | $(CH_2)_2OC_2H_5$ | 3 |
| $(CH_2)_4OH$ | $(CH_2)_4OH$ | $OCH_3$ | $OCH_3$ | $C_2H_5$ | $C_2H_5$ | 4 |
| n-$C_4H_9$ | n-$C_4H_9$ | $OCH_3$ | Cl | $(CH_2)_2OCOi$-$C_3H_7$ | $(CH_2)_2OCOi$-$C_3H_7$ | 2 |
| $(CH_2)_2CN$ | $(CH_2)_2CN$ | $OCH_3$ | H | H | $(CH_2)_2CN$ | 1 |
| $CH_3$ | $C_2H_5$ | Cl | $NHSO_2CH_3$ | H | n-$C_3H_7$ | 2 |
| $4CH_3C_6H_4$ | $CH_3$ | Cl | $NHCOC_2H_5$ | $CH_3CHCH_2CN$ | $(CH_2)_2OCOC_2H_5$ | 2 |
| i-$C_3H_7$ | i-$C_3H_7$ | $OCH_3$ | $NHCOCH_3$ | $(CH_2)_2OCOOC_2H_5$ | $(CH_2)_2OCOOC_2H_5$ | 3 |
| $C_2H_5$ | $C_2H_5$ | $OC_2H_5$ | $NHCOCH_3$ | $(CH_2)_2OCOOCH_3$ | $(CH_2)_{22}OCOOCH_3$ | 3 |
| $(CH_2)_2OCOO$-$(CH_2)_{22}OC_2H_5$ | $(CH_2)OCOO$-$(CH_2)OC_2H_5$ | H | $NHCOC_2H_5$ | $(CH_2)_2OCOO$-$(CH_2)_2OC_2H_5$ | $(CH_2)_2OCOO$-$(CH_2)_2OC_2H_5$ | 3 |
| n-$C_3H_7$ | n-$C_3H_7$ | H | $CH_3$ | $(CH_2)_2OCOOi$-$C_3H_7$ | $(CH_2)_2OCOOi$-$C_3H_7$ | 2 |
| $(CH_2)_2Br$ | $(CH_2)_2Br$ | H | $NHCOOC_6H_5$ | $C_2H_5$ | n-$C_3H_7$ | 2 |
| $CH_3$ | $CH_3$ | H | $CH_3$ | $(CH_2)_2OCONHCH_3$ | $(CH_2)_2OCONHCH_3$ | 1 |
| i-$C_3H_7$ | $C_2H_5$ | H | $NHCONHC_2H_5$ | $(CH_2)_2OH$ | $(CH_2)_2CN$ | 2 |
| $(CH_2)_2OH$ | $(CH_2)_2OH$ | H | H | $(CH_2)_2OCONHi$-$C_3H_7$ | $(CH_2)_2CN$ | 1 |
| $(CH_2)_2O$-$(CH_2)_2OCH_3$ | $(CH_2)_2O$-$(CH_2)_2OCH_3$ | $OCH_3$ | H | $(CH_2)_4OCONHn$-$C_4H_9$ | $C_2H_5$ | 2 |
| $CH_3$ | $CH_3$ | $OCH_3$ | $NHCOCH_3$ | $(CH_2)_2OCOCH_3$ | $(CH_2)_2OCOCH_3$ | 4 |
| $CH_3$ | $CH_3$ | $OC_2H_5$ | $NHCOCH_3$ | $(CH_2)_2OCOCH_3$ | $(CH_2)_2OCOCH_3$ | 4 |
| $CH_3$ | $CH_3$ | H | $NHCOCH_3$ | $(CH_2)_2OCOCH_3$ | $(CH_2)_2CN$ | 2 |
| $CH_3$ | $CH_3$ | $OCH_3$ | $NHCOCH_3$ | $(CH_2)_2OCOCH_3$ | $(CH_2)_2CN$ | 3 |

## Patentansprüche

1. Monoazofarbstoffe der Formel I

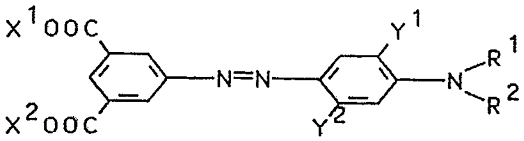

(I)

worin

$X^1$ und $X^2$ unabhängig voneinander Alkyl mit 1 bis 6 C-Atomen, das durch Chlor, Brom, Cyan, Hydroxy, Alkylcarbonyloxy mit 1 bis 3 C-Atomen in der Alkylgruppe, Alkoxycarbonyloxy mit 1 bis 4 C-Atomen in der Alkoxygruppe, Alkoxyalkoxycarbonyloxy mit 1 bis 4 C-Atomen in jeder Alkoxygruppe, Alkylaminocarbonyloxy mit 1 bis 4 C-Atomen in der Alkylgruppe, Phenyl oder Phenoxy monosubstituiert oder durch Hydroxy und/oder Alkylcarbonyloxy mit 1 bis 3 C-Atomen in der Alkylgruppe disubstituiert oder durch Hydroxy oder Alkylcarbonyloxy mit 1 bis 3 C-Atomen in der Alkylgruppe und Chlor oder Brom oder Phenoxy disubstituiert sein kann, Alkyl mit 3 bis 8 C-Atomen, dessen Kohlenstoffkette durch 1 bis 3 Sauerstoffatome unterbrochen ist und durch Hydroxy und/oder Alkylcarbonyloxy mit 1 bis 3 C-Atomen in der Alkylgruppe, Chlor oder Brom ein- oder zweifach substituiert sein kann, Cycloalkyl mit 5 oder 6 C-Atomen oder Alkenyl mit 3 bis 5 C-Atomen oder gegebenenfalls substituiertes Phenyl,

$Y^1$ Wasserstoff, Alkoxy mit 1 bis 4 C-Atomen, das durch Methoxy oder Ethoxy substituiert sein kann, Methyl, Ethyl, Chlor oder Brom,

$Y^2$ eine der Bedeutungen von $Y^1$ oder $-NHXR$,

X $-CO-$ oder $-SO_2-$,

R Alkyl mit 1 bis 3 C-Atomen, das durch Chlor, Brom, Methoxy oder Ethoxy substituiert sein kann, oder gegebenenfalls substituiertes Phenyl oder für den Fall, dass X für $-CO-$ steht, auch Alkoxy mit 1 bis 4 C-Atomen, das durch Alkoxy mit 1 bis 4 C-Atomen substituiert sein kann, gegebenenfalls substituiertes Phenoxy, Alkylamino mit 1 bis 4 C-Atomen im Alkylrest oder Phenylamino, das gegebenenfalls im Phenylkern substituiert sein kann,

$R^1$ Wasserstoff, Alkyl mit 1 bis 6 C-Atomen, das durch Chlor, Brom, Cyan, Hydroxy, Alkylcarbonyloxy mit 1 bis 3 C-Atomen in der Alkylgruppe, Alkoxycarbonyloxy mit 1 bis 4 C-Atomen in der Alkoxygruppe, Alkoxyalkoxycarbonyloxy mit 1 bis 4 C-Atomen in jeder Alkoxygruppe, Alkylaminocarbonyloxy mit 1 bis 4 C-Atomen in der Alkylgruppe, gegebenenfalls substituiertes Phenylaminocarbonyloxy, Phenyl oder Phenoxy monosubstituiert oder durch Hydroxy und/oder Alkylcarbonyloxy mit 1 bis 3 C-Atomen in der Alkylgruppe disubstituiert oder durch Hydroxy oder Alkylcarbonyloxy mit 1 bis 3 C-Atomen in der Alkylgruppe und Chlor oder Brom oder Phenoxy disubstituiert sein kann, Alkenyl mit 3 bis 5 C-Atomen, Alkyl mit 3 bis 8 C-Atomen, dessen Kohlenstoffkette durch 1 bis 3 Sauerstoffatome unterbrochen ist und durch Hydroxy und/oder Alkylcarbonyloxy mit 1 bis 3 C-Atomen in der Alkylgruppe, Chlor oder Brom ein- oder zweifach substituiert sein kann,

$R^2$ mit Ausnahme von Wasserstoff eine der Bedeutungen von $R^1$ besitzt oder Cycloalkyl mit 5 oder 6 C-Atomen, gegebenenfalls substituiertes Phenyl

bedeuten, wobei jedoch in den Resten $X^1$, $X^2$, $Y^2$, $R^1$ und $R^2$ zusammen höchstens ein Phenylrest vorhanden ist.

2. Monoazofarbstoffe nach Anspruch 1, dadurch gekennzeichnet, dass $X^1$, $X^2$ und $R^2$ gegebenenfalls substituierte Alkylreste mit 1 bis 4 C-Atomen bedeuten.

3. Monoazofarbstoffe nach Anspruch 1 und/oder 2, dadurch gekennzeichnet, dass $Y^1$ Wasserstoff und $Y^2$ Wasserstoff, Chlor, Brom, $-CH_3$, $-OCH_3$ oder $-NHXR$ bedeuten.

4. Monoazofarbstoffe nach Anspruch 1 und/oder 2, dadurch gekennzeichnet, dass $Y^1$ $-CH_3$ oder $-OCH_3$ und $Y^2$ Wasserstoff, $-CH_3$ oder $-OCH_3$ bedeuten.

5. Monoazofarbstoffe nach Anspruch 1 und/oder 2, dadurch gekennzeichnet, dass $Y^1$ $-CH_3$, $-OCH_3$, $-OC_2H_5$, $-Cl$, $-O(CH_2)_2OCH_3$ oder $-O(CH_2)_2OC_2H_5$ und $Y^2$ $-NHXR$ bedeuten.

6. Monoazofarbstoffe nach einem oder mehreren der Ansprüche 1 bis 5, dadurch gekennzeichnet, dass $R^1$ und/oder $R^2$ Alkoxy($C_1$-$C_4$)-ethyl oder durch Hydroxy, Alkylcarbonyloxy mit 1 bis 3 C-Atomen, Cyan substituierte Alkylreste mit 1 bis 4 C-Atomen bedeuten.

7. Verfahren zur Herstellung der Farbstoffe der Ansprüche 1 bis 6, dadurch gekennzeichnet, dass ein Amin der Formel II

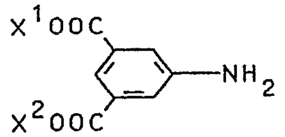

(II),

diazotiert und auf ein Amin der Formel III

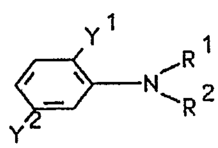

(III)

gekuppelt wird, wobei die Reste $X^1$, $X^2$, $Y^1$, $Y^2$, $R^1$ und $R^2$ die in den Ansprüchen 1 bis 6 angegebenen Bedeutungen besitzen.

8. Verwendung der Farbstoffe der Ansprüche 1 bis 6 zum Färben und Bedrucken von hydrophoben Fasermaterialien einzeln oder im Gemisch mit anderen Faserarten.

9. Verwendung der Farbstoffe der Ansprüche 1 bis 6 zur Herstellung von Ätzreservedrucken nach dem alkalischen Ätzreservedruckverfahren auf Textilmaterialien, die aus hydrophoben Fasern bestehen oder solche Fasern enthalten.

## Claims

1. Monoazo dyestuffs of the formula I

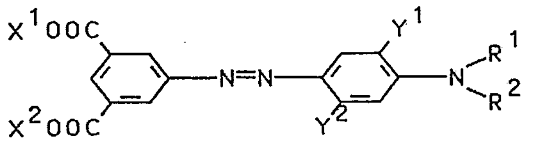 (I)

wherein $X^1$ and $X^2$ independently of one another denote alkyl which has 1 to 6 C atoms and can be monosubstituted by chlorine, bromine, cyano, hydroxyl, alkylcarbonyloxy with 1 to 3 C atoms in the alkyl group, alkoxycarbonyloxy with 1 to 4 C atoms in the alkoxy group, alkoxyalkoxycarbonyloxy with 1 to 4 C atoms in each alkoxy group, alkylaminocarbonyloxy with 1 to 4 C atoms in the alkyl group, phenyl or phenoxy or can be disubstituted by hydroxyl and/or alkylcarbonyloxy with 1 to 3 C atoms in the alkyl group, or by hydroxyl or alkylcarbonyloxy with 1 to 3 C atoms in the alkyl group and chlorine or bromine or phenoxy, or denote alkyl which has 3 to 8 C atoms, the carbon chain of which is interrupted by 1 to 3 oxygen atoms and can be monosubstituted or disubstituted by hydroxy and/or alkylcarbonyloxy with 1 to 3 C atoms in the alkyl group, chlorine or bromine, or denote cycloalkyl with 5 or 6 C atoms, alkenyl with 3 to 5 C atoms or optionally substituted phenyl, $Y^1$ denotes hydrogen, alkoxy which has 1 to 4 C atoms and can be substituted by methoxy or ethoxy, methyl, ethyl, chlorine or bromine, $Y^2$ has one of the meanings of $Y^1$ or denotes $-NHXR$, X denotes $-CO-$ or $-SO_2-$, R denotes alkyl which has 1 to 3 C atoms and can be substituted by chlorine, bromine, methoxy or ethoxy, or denotes optionally substituted phenyl or, in the case where X represents $-CO-$, also denotes alkoxy which has 1 to 4 C atoms and can be substituted by alkoxy with 1 to 4 C atoms, or denotes optionally substituted phenoxy, alkylamino with 1 to 4 C atoms in the alkyl radical or phenylamino, which can optionally be substituted in the phenyl nucleus, $R^1$ denotes hydrogen or alkyl which has 1 to 6 C atoms and can be monosubstituted by chlorine, bromine, cyano, hydroxyl, alkylcarbonyloxy with 1 to 3 C atoms in the alkyl group, alkoxycarbonyloxy with 1 to 4 C atoms in the alkoxy group, alkoxyalkoxycarbonyloxy with 1 to 4 C atoms in each alkoxy group, alkylaminocarbonyloxy with 1 to 4 C atoms in the alkyl group, optionally substituted phenylaminocarbonyloxy, phenyl or phenoxy or can be disubstituted by hydroxy and/or alkylcarbonyloxy with 1 to 3 C atoms in the alkyl group, or by hydroxyl or alkylcarbonyloxy with 1 to 3 C atoms in the alkyl group and chlorine or bromine or phenoxy, or denotes alkenyl with 3 to 5 C atoms, or alkyl with 3 to 8 C atoms, the carbon chain of which is interrupted by 1 to 3 oxygen atoms and can be monosubstituted or disubstituted by hydroxyl, alkylcarbonyloxy with 1 to 3 C atoms in the alkyl group, chlorine or bromine, $R^2$ has one of the meanings of $R^1$, with the exception of hydrogen, or denotes cycloalkyl with 5 or 6 C atoms or optionally substituted phenyl, but wherein at most one phenyl radical is present in the radicals $X^1$, $X^2$, $Y^2$, $R^1$ and $R^2$ together.

2. Monoazo dyestuffs according to Claim 1, characterised in that $X^1$, $X^2$ and $R^2$ denote optionally substituted alkyl radicals with 1 to 4 C atoms.

3. Monoazo dyestuffs according to Claim 1 and/or 2, characterised in that $Y^1$ denotes hydrogen and $Y^2$ denotes hydrogen, chlorine, bromine, $-CH_3$, $-OCH_3$ or $-NHXR$.

4. Monoazo dyestuffs according to Claim 1 and/or 2, characterised in that $Y^1$ denotes $-CH_3$, or $-OCH_3$ and $Y^2$ denotes hydrogen, $-CH_3$, or $-OCH_3$.

5. Monoazo dyestuffs according to Claim 1 and/or 2, characterised in that $Y^1$ denotes $-CH_3$, $-OCH_3$, $-OC_2H_5$, $-Cl$, $-O(CH_2)_2OCH_3$ or $-O(CH_2)_2OC_2H_5$ and $Y^2$ denotes $-NHXR$.

6. Monoazo dyestuffs according to one or more of Claims 1 to 5, characterised in that $R^1$ and/or $R^2$ denote alkoxy $(C_1$-$C_4)$-ethyl, or alkyl radicals which have 1 to 4 C atoms and are substituted by hydroxyl, alkylcarbonyloxy with 1 to 3 C atoms or cyano.

7. Process for the preparation of the dyestuffs of Claims 1 to 6, characterised in that an amine of the formula II

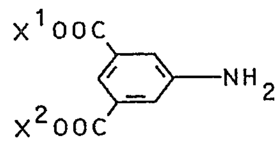 (II)

is diazotised and the diazotation product is coupled to an amine of the formula III

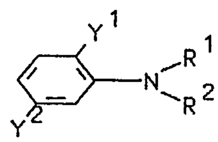 (III)

the radicals $X^1$, $X^2$, $Y^1$, $Y^2$, $R^1$ and $R^2$ having the meanings given in Claims 1 to 6.

8. Use of the dyestuffs of Claims 1 to 6 for dyeing and printing hydrophobic fibre materials, by themselves or in a mixture with other types of fibres.

9. Use of the dyestuffs of Claims 1 to 6 for the production of discharge resist prints by the alkaline discharge resist printing process on textile materials consisting of hydrophobic fibres or containing such fibres.

## Revendications

1. Colorants monoazoïques de formule I ci-dessous

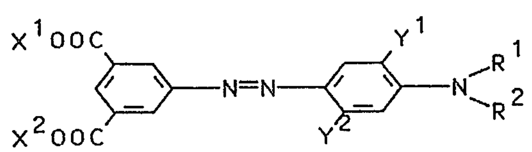 (I)

dans laquelle

$X^1$ et $X^2$ représentent chacun, indépendamment

l'un de l'autre, un alkyle en $C_1$ à $C_6$ pouvant être monosubstitués par un atome de chlore ou de brome, un groupe cyano, hydroxy, alkylcarbonyloxy en $C_1$ à $C_3$ dans l'alkyle, alcoxy carbonyloxy en $C_1$ à $C_4$ dans le groupe alcoxy, alcoxyalcoxycarbonyloxy en $C_1$ à $C_4$ dans chaque groupe alcoxy, alkylaminocarbonyloxy en $C_1$ à $C_4$ dans l'alkyle, phényle ou phénoxy, ou bien disubstitués par des hydroxyles et/ou des groupes alkylcarbonyloxy en $C_1$ à $C_3$ dans l'alkyle, ou encore disubstitués par des hydroxyles ou des groupes carbonyloxy en $C_1$ à $C_3$ dans l'alkyle et par du chlore ou du brome ou le groupe phénoxy, un alkyle en $C_3$ à $C_8$ dont la chaîne carbonée est interrompue par 1 à 3 atomes d'oxygène et qui peut avoir un ou deux substituants choisis parmi des hydroxyles et/ou des groupes carbonyloxy en $C_1$ à $C_3$ dans l'alkyle, du chlore ou du brome, un cycloalkyle en $C_5$ ou $C_6$ ou un alcényle en $C_3$ à $C_5$ ou bien un phényle éventuellement substitué,

$Y^1$ représente l'hydrogène, un alcoxy en $C_1$ à $C_4$ pouvant être substitué par un groupe méthoxy ou éthoxy, un groupe méthyle ou éthyle ou un atome de chlore ou de brome,

$Y^2$ a l'une des significations de $Y^1$ ou bien est un groupe $-NHXR$,

X étant un groupe $-CO-$ ou $-SO_2-$,

R désigne un alkyle en $C_1$ à $C_3$ pouvant être substitué par du chlore ou du brome ou le groupe méthoxy ou éthoxy, ou un phényle éventuellement substitué, ou encore, si X est un groupe $-CO-$, également un alcoxy en $C_1$ à $C_4$ pouvant être substitué par un autre alcoxy en $C_1$ à $C_4$, un phénoxy éventuellement substitué, un groupe alkylamino en $C_1$ à $C_4$ dans l'alkyle ou un groupe phénylamino dont le cycle phénylique peut être éventuellement substitué,

$R^1$ désigne l'hydrogène, un alkyle en $C_1$ à $C_6$ pouvant être monosubstitué par un atome de chlore ou de brome ou par un groupe cyano, hydroxy, alkylcarbonyloxy en $C_1$ à $C_3$ dans l'alkyle, alcoxycarbonyloxy en $C_1$ à $C_4$ dans l'alcoxy, alcoxyalcoxycarbonyloxy en $C_1$ à $C_4$ dans chaque groupe alcoxy, alkylaminocarbonyloxy en $C_1$ à $C_4$ dans l'alkyle, un groupe phénylaminocarbonyloxy éventuellement substitué ou un groupe phényle ou phénoxy, ou bien pouvant être disubstitué par des hydroxyles et/ou des groupes alkylcarbonyloxy en $C_1$ à $C_3$ dans l'alkyle, ou encore disubstitué par des hydroxyles ou des groupes alkyl — carbonyloxy en $C_1$ à $C_3$ dans l'alkyle et par du chlore ou du brome ou le groupe phénoxy, un alcényle en $C_3$ à $C_5$, un alkyle en $C_3$ à $C_8$ dont la chaîne carbonée est interrompue par 1 à 3 atomes d'oxygène et pouvant comporter un ou deux substituants choisis parmi des hydroxyles et/ou des groupes alkyl — carbonyloxy en $C_1$ à $C_3$ dans l'alkyle, et

$R^2$ à l'exception de l'hydrogène, a l'une des significations de $R^1$ ou bien est un cycloalkyle en $C_5$ ou $C_6$ ou un phényle éventuellement substitué, mais avec au maximum un radical phényle dans l'ensemble de $X^1$, $X^2$, $Y^2$, $R^1$ et $R^2$.

2. Colorants monoazoïques selon la revendication 1, caractérisés en ce que $X^1$, $X^2$ et $R^2$ sont des radicaux alkyles en $C_1$ à $C_4$ éventuellement substitués.

3. Colorants monoazoïques selon la revendication 1, et/ou 2, caractérisés en ce que $Y^1$ est l'hydrogène et $Y^2$ l'hydrogène, le chlore ou le brome ou un groupe $-CH_3$, $-OCH_3$ ou $-NHXR$.

4. Colorants monoazoïques selon la revendication 1 et/ou 2, caractérisés en ce que $Y^1$ est un groupe $-CH_3$, ou $-OCH_3$ et $Y^2$ l'hydrogène ou un groupe $-CH_3$ ou $-OCH_3$.

5. Colorants monoazoïques selon la revendication 1 et/ou 2, caractérisés en ce que $Y^1$ est un groupe $-CH_3$, $-OCH_3$ ou $-OC_2H_5$, $-Cl$, ou un groupe $-O(CH_2)_2OCH_3$ ou $-O(CH_2)_2OC_2H_5$ et $Y^2$ un groupe $-NHXR$.

6. Colorants monoazoïques selon une ou plusieurs des revendications 1 à 5, caractérisés en ce que $R^1$ et/ou $R^2$ sont des alcoxy ($C_1$-$C_4$) éthyles ou des alkyles en $C_1$ à $C_4$ substitués par des groupes hydroxy, alkylcarbonyloxy en $C_1$ à $C_3$ ou cyano.

7. Procédé de préparation des colorants selon les revendications 1 à 6, procédé caractérisé en ce que l'on diazote une amine de formule

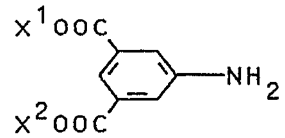

(II)

et on copule le produit de la diazotation sur une amine de formule III

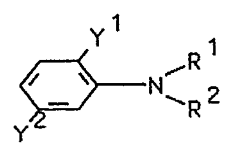

(III)

les symboles $X^1$, $X^2$, $Y^1$, $Y^2$, $R^1$ et $R^2$ ayant les significations indiquées aux revendications 1 à 6.

8. L'emploi des colorants selon les revendications 1 à 6 pour la teinture et l'impression de matières fibreuses hydrophobes, seules ou mélangées avec d'autres sortes de fibres.

9. L'emploi des colorants des revendications 1 à 6 pour la préparation d'impressions avec rongeant-réserve par le procédé d'impression alcalin au rongeant-réserve sur des matières textiles formées de fibres hydrophobes ou comprenant de telles fibres.